# EUROPEAN PATENT APPLICATION

(11) **EP 1 621 274 A1**
(43) Date of publication of application: **01.02.2006**
(21) Application number: 04254477.5
(22) Date of filing: 27.07.2004
(51) Int. Cl.: B23B 51/02, B28D 1/14, E21B 10/44

(54) **A drill bit**

(71) Applicant: Black & Decker Inc., Newark, Delaware 19711 (US)
(72) Inventor: Kalomeris, Charles E., East Longmeadow, MA 01028-3184 (US)
(74) Representative: Bell, Ian Stephen

(57) **Abstract**

A drill bit (2) comprising a shank (12) at one end of the drill bit, wherein the shank is adapted to be connected to the output of a drill, a drilling head (4) at the other end of the drill bit, wherein the drilling head is for cutting a hole in a work piece, and at least one flute (16, 18) extending from the drilling head (4) toward the shank (12). The at least one flute is for conveying debris from a hole cut in a work piece by the drill bit. The drill bit (2) further comprises at least one groove (20a, 20b, 20c) extending from the drilling head (4) towards the shank (12), wherein the at least one groove does not follow the path of the at least one flute (16, 18) so as to provide a debris-free communication path along the length of the hole.

## Description

The present invention relates to drill bits, and relates particularly, but not exclusively, to drill bits for drilling masonry.

A drill bit is used for cutting holes in a work piece. Generally, a drill bit has a drilling head with cutting edges for cutting into the work piece and helical flutes for conveying debris cut from the work piece. The helical flutes extend rearward from the drilling head and along most of the length of the drill bit. Each helical flute departs from a location just in front of a respective cutting edge relative to the direction of rotation of the drill bit during normal use. Debris cut by each cutting edge falls into, and is collected by, a respective flute. The helical path of the flute runs in the opposite direction to the direction of rotation of the drill bit in normal use. As the drill bit rotates the debris naturally slides along the helical flutes which steadily convey the debris away from the drilling head and out of the hole drilled in the work piece.

Known drill bits suffer from the drawback that their helical flutes can be blocked by debris. Also, heat generated by the drilling operation warms the air accumulated in the hole. Over time the hot air naturally expands as its temperature rises and, if there is a blockage in the helical flutes, there is a risk that the expanding hot air is pressurised to the extent that it eventually overcomes and clears the blockage. As a result, a sudden release, or burst, of air shoots out of the hole. This burst of hot air entrains debris that can be directed towards the user's face. This is undesirable as it can cause irritation or even injury to the user.

The present invention seeks to overcome the above disadvantage of the prior art.

According to the present invention, there is provided a drill bit comprising a shank at one end of the drill bit, wherein the shank is adapted to be connected to the output of a drill, a drilling head at the other end of the drill bit, wherein the drilling head has at least one cutting edge for cutting a hole in a work piece, and at least one helical flute extending rearward toward the shank from a location in front of a respective cutting edge relative to the direction of rotation of the drill bit in use, wherein the at least helical one flute is for conveying debris from a hole cut in a work piece by the at least one cutting edge, characterised in that the drill bit further comprises at least one straight groove extending rearward towards the shank from the drilling head.

A drilling operation creates a lot of dust and debris. The vast majority of debris will be collected by the at least one helical flute because it begins at a location just in front of a respective cutting edge. As the drill bit rotates and progressively penetrates the work piece, most, if not all, of the debris naturally flows along the helical flute and out of the hole. This will help keep the at least one straight groove substantially debris-free. By providing a drill bit with at least one debris-free straight groove extending rearward towards the shank from the drilling head, air located in the hole can freely pass along the length of the drill bit and exit the hole without risk of air being trapped behind a blockage of debris in the at least one helical flute. This arrangement prevents hot pressurised air from expanding and suddenly overcoming a blockage of debris in the at least one helical flute, and the attendant risk of this debris flying towards the user.

Preferably, the at least one straight groove follows a path substantially parallel to a longitudinal axis of the drill bit. This has the advantage that the at least one straight groove follows the shortest path from bottom of the hole, where the drilling head is located, to the exit of the hole. This provides the most direct escape route for air located at the bottom of the hole.

Preferably, the drill bit comprises a plurality of cutting edges and helical flutes arranged at equiangular intervals about the drilling head. The equiangular arrangement of the cutting edges and the helical flutes ensures that the mass of the drill bit is balanced. This minimises vibration of the drill bit during use.

A preferred embodiment of the present invention will now be described, by way of example only and not in any limitative sense, with reference to the following drawings, in which: -
Figure 1 is a front-end view of a drill bit embodying the present invention;
Figure 2 is a side view of the drill bit of Figure 1;

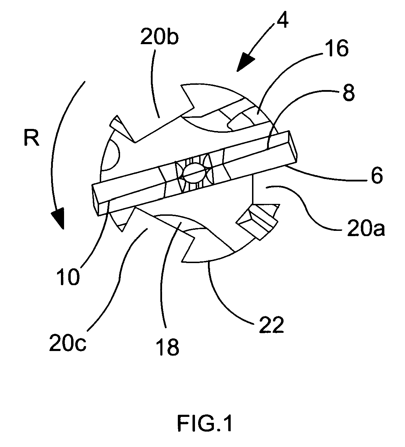

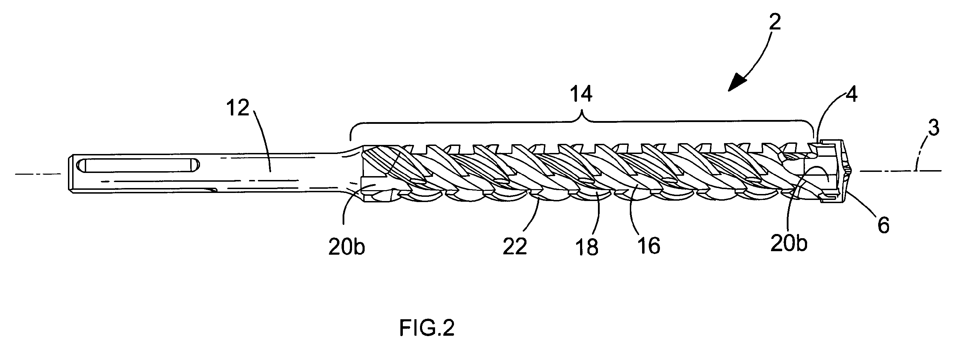

Referring to Figures 1 and 2, a drill bit 2 is elongate and has a longitudinal axis 3. The drill bit 2 comprises at its front end a drilling head 4 having a cutting plate 6 with a pair of diametrically opposed cutting edges 8, 10. Each cutting edge extends radially outward from the longitudinal axis 3. The drill bit 2 also comprises at its rear end a shank 12 for attachment to the output of a power tool, such as a drill or a hammer drill. The manner in which the shank 12 is connected to the output of a drill or a hammer drill will be familiar to persons skilled in the art. The drill bit 2 further comprises a flute portion 14 located between the drilling head 4 and the shank 12.

The flute portion 14 has a pair of concentric helical flutes 16, 18. The helical flutes 16, 18 extend rearward from the drilling head 4 and along the fluted portion 14. Each helical flute 16, 18 departs from a location just in front of a respective cutting edge 8, 10 relative to the direction of rotation R of the drill bit during normal use. Debris cut by each cutting edge falls into, and is collected by, a respective flute. The helical path of the helical flutes runs in the opposite direction to the direction of rotation R of the drill bit in normal use. As the drill bit rotates the debris naturally slides along the helical flutes which steadily convey the debris away from the drilling head and out of the hole drilled in the work piece.

The flute portion 14 also has three straight grooves 20a, 20b, 20c. The straight grooves 20a, 20b, 20c follow a path that cuts through an outer circumference 22 of the flute portion 14 in a direction parallel to the longitudinal axis 3 of the drill bit 2. The three straight grooves 20a, 20b, 20c are arranged at equiangular intervals about the longitudinal axis 3 to ensure that the mass of the drill bit is balanced. Although not strictly necessary, at least one of the straight grooves 20a departs from a location behind a respective cutting edge 8, relative to the direction of rotation R of the drill bit during normal use. That way, at least one groove 20a is specifically positioned to avoid collecting debris cut from a work piece by the cutting edges 8, 10. Nevertheless, most, if not all, debris will naturally flow along the helical path of the helical flutes 16, 18, and not the straight grooves 20a, 20b, 20c, as the drill bit rotates.

The drilling operation of the drill bit 2 shown in Figures 1 to 4 will now be described.

The drill bit 2 is rotated by means of a drill, or a hammer drill, (not shown) such that the cutting edges 8, 10 of the cutting plate 6 cut a hole in a work piece. Debris formed during the drilling operation is collected by the helical flutes 16, 18 and naturally flows along helical flutes 16, 18 and out of the hole due to the rotation and forward motion of the drill bit 2 into the work piece. The drilling operation also creates a lot of heat due to the significant frictional forces created by the cutting edges 8, 10 cutting into the work piece. This heats the portion of the work piece adjacent the hole and air located in the hole. The hot air naturally expands and, in doing so, needs to escape from the hole. If the helical flutes 16, 18 should become blocked by debris then the straight grooves 20a, 20b, 20c provide an alternative and unblocked route from the drilling head 4 along the length of the fluted portion 14. This allows the hot air to freely escape from the hole and, in doing so, prevents an accumulation of pressurised air behind the blockage.

It will be appreciated by persons skilled in the art that the above embodiment has been described by way of example only, and not in any limitative sense, and that various alterations and modifications are possible without departure from the scope of the inventions as defined by the appended claims.

## Claims

1. A drill bit (2) comprising:
a shank (12) at one end of the drill bit, wherein the shank is adapted to be connected to the output of a drill;
a drilling head (4) at the other end of the drill bit, wherein the drilling head has at least one cutting edge (8, 10) for cutting a hole in a work piece; and
at least one helical flute (16, 18) extending rearward toward the shank (12) from a location in front of a respective cutting edge (8, 10) relative to the direction of rotation (R) of the drill bit in use, wherein the at least helical one flute (16, 18) is for conveying debris from a hole cut in a work piece by the at least one cutting edge (8, 10), **characterised in that** the drill bit (2) further comprises at least one straight groove (20a, 20b, 20c) extending rearward towards the shank (12) from the drilling head (4).

2. A drill bit (2) as claimed in claim 1, wherein the at least one straight groove (20a, 20b, 20c) extends substantially parallel to a longitudinal axis (3) of the drill bit.

3. A drill bit (2) as claimed in either one of claims 1 or 2, wherein the at least one groove (20a) extends rearward toward the shank (12) from a location behind a respective cutting edge (8) relative to the direction of rotation (R) of the drill bit in use.

4. A drill bit (2) as claimed in any one of the previous claims, wherein the drill bit comprises a plurality of cutting edges (8, 10) and helical flutes (16, 18) arranged at equiangular intervals about the drilling head (4).
